(19) Europäisches Patentamt
European Patent Office
Office européen des brevets

(11) Veröffentlichungsnummer: **0 008 733**
**B1**

# (12) EUROPÄISCHE PATENTSCHRIFT

(45) Veröffentlichungstag der Patentschrift: **18.08.82**

(51) Int. Cl.³: **C 08 L 55/02**, C 08 K 5/09, C 08 K 5/42

(21) Anmeldenummer: **79103044.8**

(22) Anmeldetag: **20.08.79**

(54) **Kerbschlagzähe ABS-Formmassen und Verwendung von Perfluoralkansäuren und ihrer Derivate zur Verbesserung der Kerbschlagzähigkeit von ABS-Formmassen.**

(30) Priorität: **30.08.78 DE 2837735**

(43) Veröffentlichungstag der Anmeldung: **19.03.80 Patentblatt 80/6**

(45) Bekanntmachung des Hinweises auf die Patenterteilung: **18.08.82 Patentblatt 82/33**

(84) Benannte Vertragsstaaten: **BE DE FR GB IT NL**

(56) Entgegenhaltungen:
**DE-A-2 704 679**
**FR-A-2 319 659**
**US-A-3 876 612**

(73) Patentinhaber: **BAYER AG, Zentralbereich Patente, Marken und Lizenzen, D-5090 Leverkusen 1, Bayerwerk (DE)**

(72) Erfinder: **Lindner, Christian, Dr., Riehler-Strasse 200, D-5 Köln 60 (DE)**
Erfinder: **Ott, Karl-Heinz, Dr., Paul-Klee-Strasse 54, D-5090 Leverkusen (DE)**
Erfinder: **Arnold, Bernhard, Erftstrasse 2, D-5024 Pulheim (DE)**
Erfinder: **Kowitz, Friedrich, Dr., Friedrich-Ebert-Strasse 44, D-4047 Dormagen (DE)**
Erfinder: **Kuhlmann, Dieter, Dr., Reiher-Weg 31, D-5024 Pulheim (DE)**

**EP 0 008 733 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Kerbschlagzähe ABS-Formmassen und Verwendung von Perfluoralkansäuren und ihrer Derivate zur Verbesserung der Kerbschlagzähigkeit von ABS-Formmassen.

Die Herstellung von ABS-Formmassen erfordert ausser der eigentlichen Polymerisation eine Compoundierung, in der Pfropfkautschuk und SAN-Copolymerisat intensiv durchmischt und für die Weiterverarbeitung bzw. den Gebrauch notwendige Additive wie Gleitmittel, Pigmente, Antistatika eingearbeitet werden.

Zur Compoundierung werden meist Innenkneter oder zwei- und vierwellige Schneckenkneter benutzt, an die ein Zweiwalzenstuhl mit Band-Granulator bzw. ein Strang- oder Unterwasser-Granulator angeschlossen ist. Die Art der Vorrichtung richtet sich nach dem ABS-Herstellprozess. Wenn das SAN-Copolymerisat als Lösungspolymerisat vorliegt, verwendet man bevorzugt Schneckenkneter. Polymerisiert man in Emulsion, so wird das resultierende Pulver oftmals in einem Innenkneter weiterverarbeitet.

Im allgemeinen setzt man den Formmassen ca. 1–3 Gew.-% eines Gleitmittels als Verarbeitungshilfe zu, um ihr Fliessverhalten zu verbessern und um innere Spannungen in den daraus hergestellten Formteilen zu vermindern.

Für ABS-Formmassen geeignete Gleitmittel sind u.a. Alkali- und Erdalkali-Salze von Fettsäuren; Fettsäureester von ein- und mehrwertigen Alkoholen und Amide langkettiger Fettsäuren und Sulfonsäuren.

Der Erfindung liegt die Erkenntnis zugrunde, dass durch Zusatz geringer Mengen von Perfluoralkansäuren die Schlagzähigkeit, insbesondere die Kerbschlagzähigkeit, besonders bei tiefen Temperaturen verbessert wird.

ABS-Formmassen im Sinne der Erfindung sind Mischungen aus

a) 5–70 Gew.-% eines oder mehrerer Pfropfprodukte, und

b) 95–30 Gew.-% eines thermoplastischen Harzes, welches ein Polymerisat oder Copolymerisat von Styrol, α-Methylstyrol, Acrylnitril, Methylmethacrylat oder Maleinsäureanhydrid darstellt, mit einem Gehalt von 0,05–1,0 Gew.-% einer Perfluoralkansäure oder eines Derivats davon.

Pfropfprodukte a) sind bevorzugt Polymerisate, die durch Polymerisation von Pfropfmonomeren in Anwesenheit eines Kautschuks als Pfropfbasis erhalten werden. Der Kautschukanteil ist 5–80 Gew.-% und wird durch das Polymerisationsverfahren mitbestimmt.

Als Pfropfbasis kommen insbesondere Polybutadien-, Butadien/Acrylnitril- und Butadien/Styrol-Polymerisate, sowie Butadien-Styrol-Blockpolymerisate in Betracht. Ebenfalls verwendbar sind Acrylester-Vinylether-Copolymerisate und EPDM-Terpolymerisate. Pfropfmonomere sind hauptsächlich Styrol, Gemische aus Styrol und Acrylnitril, bevorzugt im Gewichtsverhältnis 90:10 bis 50:50, Gemische aus Styrol und Methylmethacrylat, bevorzugt im Gewichtsverhältnis 5:95 bis 95:5, sowie Styrol-Arylnitril-Methylmethacrylat-Gemische. Die Herstellung der Pfropfprodukte ist bekannt:

Man kann die Pfropfmonomeren in Gegenwart eines Latex der Pfropfbasis in Emulsion an radikalischen Initiatoren polymerisieren. Ist die Pfropfbasis anvernetzt und werden bestimmte Pfropfmonomer Pfropfbasis-Verhältnisse eingehalten, so ist die Teilchengrösse des Latex der Propfbasis auch bestimmend für die Teilchengrösse des Pfropfpolymerisats. Die Pfropfhülle, aus chemisch an die Kautschukteilchen gebundenen Ketten des Polymerisats der Pfropfmonomeren, ist verhältnismässig dünn und ändert den Durchmesser des Kautschukteilchens nicht wesentlich. «Durchmesser» oder «Teilchengrösse» ist hierbei der mittlere Durchmesser $d_{50}$, d.h. der Durchmesser, oberhalb dessen und unterhalb dessen die Durchmesser von jeweils 50% der Teilchen liegen. Die Pfropfreaktion ist unvollständig. Neben dem eigentlichen Pfropfpolymerisat entsteht auch das nicht gepfropfte Copolymere der Pfropfmonomeren. Deshalb wird das Produkt der Pfropfreaktion als «Pfropfprodukt» bezeichnet.

Man kann Pfropfprodukte auch durch Masse-Lösungs- oder Masse-Suspensions-Polymerisation herstellen, wenn man von einem monomerlöslichen Kautschuk ausgeht. Die Grösse der Pfropfkatuschukteilchen wird dann durch die Phaseninversion festgelegt und kann sowohl mechanisch durch Rühren als auch durch chemische Beeinflussung des Phasengleichgewichts (Zusatz von Dispergatoren) variiert werden. Im allgemeinen werden so Teilchen $\geqq 1\ \mu$ erhalten. Das Pfropfprodukt enthält max. ca. 25 Gew.-% Kautschuk.

Man kann erfindungsgemäss Pfropfprodukte verwenden, deren Teilchen einen Durchmesser von 0,05–20 μ haben, wobei ein erheblicher Teil der Pfropfmonomeren im Innern des Kautschukteilchens als Homo- oder Copolymerisat includiert sein kann. Bevorzugt sind Teilchendurchmesser von 0,05 bis 1,2 μ bzw. 0,05–0,6 μ. Es ist auch möglich, mehrere voneinander verschiedene Pfropfprodukte nebeneinander einzusetzen, z.B. zwei Pfropfdichte, die Kautschukteilchengrösse und/oder die Pfropfdichte unterscheiden. Besonders geeignet ist beispielsweise ein Gemisch aus einem Pfropfprodukt aus Kautschukteilchen mit einem $d_{50}$-Wert von 0,35 bis 10 μ und einem Pfropfprodukt aus Kautschukteilchen mit einem mittleren Teilchendurchmesser $d_{50}$ von 0,05–0,32 μ, d.h. sogenannte Bimodal-Systeme.

Bevorzugt enthalten die Pfropfprodukte 35–80 Gew.-% (insbesondere 40–70 Gew.-%) Kautschuk, besitzen einen mittleren Teilchendurchmesser im Bereich 0,1–0,5 μ und werden in einer solchen Menge eingesetzt, dass die Formmasse 5 bis 25 Gew.-%, vorzugsweise 5–20 Gew.-% Kautschuk (Pfropfbasis) enthält.

Das den zweiten Bestandteil der ABS-Formmassen b) bildende thermoplastische Harz bildet die

kontinuierliche Phase (Matrix) und ist ein Polymerisat oder Copolymerisat von Styrol, α-Methylstyrol, Acrylnitril, Methylmethacrylat und Maleinsäureanhydrid. Bevorzugt sind Polystyrol, Styrol-Acrylnitril-Copolymerisate mit einem Acrylnitril-Gehalt von 20–35 Gew.-% sowie α-Methylstyrol-Acrylnitril-Copolymere mit einem Acrylnitril-Gehalt von 20–31 Gew.-%. Das Gewichtsmittel des Molekulargewichts dieser Harze 50 000– 550 000. Die molekulare Uneinheitlichkeit, ausgedrückt durch den Wert $\frac{M_w}{M_n} - 1 = U_n 1,0–3,5$.

Wird nur ein Pfropfprodukt zur Herstellung der Formmassen verwendet, so ist es vorteilhaft, wenn die quantitative Zusammensetzung der Pfropfmonomeren und die der das Harz bildenden Monomeren weitgehend übereinstimmen. Verwendet man zwei Pfropfprodukte, so ist es vorteilhaft, wenn das Mengenverhältnis der Styrol- und Acrylnitrilteile im Polymerisat der Pfropfhülle der grobteiligeren Pfropfkomponente von dem des Harzes abweicht. α-Methylstyrol kann nicht als Pfropfmonomer verwendet werden.

Die Styrol- bzw. α-Methylstyrol-Acrylnitril-Copolymerisate können nach bekannten Verfahren hergestellt werden. Beispielhaft seien genannt: Masse-Polymerisation, Lösungs-Polymerisation, Suspensions-Polymerisation und Emulsions-Polymerisation.

Pfropfprodukte und thermoplastisches Harz werden häufig getrennt hergestellt; beide meist durch Emulsionspolymerisation. Fallen beide als Latex an, so können die Latices gemischt und gemeinsam ausgefällt werden.

Erfindungsgemäss geeignete Fluorverbindungen sind Perfluoralkansäuren und deren Derivate, die, in kleinen Mengen ABS-Formmassen zugesetzt, deren Kerbschlagzähigkeit verbessern, ohne die anderen physikalischen Eigenschaften zu beeinträchtigen. Geeignete Derivate der Perfluoralkansäuren sind beispielsweise Alkali-, Erdalkalisalze, Ammoniumsalze von Säuren folgender Formeln:

$CF_3–(CF_2)_n–COOH$ I

$CF_3–(CF_2)_n–SO_3H$ II

in denen n ganze Zahlen von 1 bis 20 bedeutet. Ebenfalls geeignet sind Ester oder Amide dieser Säuren, z.B. der Formeln:

$CF_3–(CF_2)_n–COOR$ III

$CF_3–(CF_2)_n–CONR'R''$ IV

$CF_3–(CF_2)_n–SO_3R$ V

$CF_3–(CF_2)_n–SO_2NR'R''$ VI,

in denen R, R', R'' Arylreste mit 6 bis 12 C-Atomen, Alkylarylreste mit 7 bis 20 C-Atomen, geradkettige oder verzweigte Alkylreste mit 1 bis 20 C-Atomen und Alkyl- oder Arylreste, die funktionelle organische Gruppen tragen (wie z.B. Carbonsäure-Derivate, Halogene, Hydroxylgruppen, olefinische Gruppen) bedeuten.

Perfluoralkansäurederivate sind bekannt. Gegenstand der Erfindung ist ferner die Verwendung von 0,05 bis 1 Gew.-% Perfluoralkansäuren und deren Derivaten als Zusatz zu ABS-Formmassen zur Verbesserung der Kerbschlagzähigkeit.

Die Perfluoralkansäuren (oder -Derivate) können allein oder zusammen mit 0,25 bis 5 Gew.-Teilen, bezogen auf 100 Gew.-Teile Polymer der üblichen Gleitmittel, angewendet werden. Bevorzugt sind die folgenden Kombinationen (jeweils pro 100 Gew.-Teile ABS-Formmasse):

1. 0,05–1,0 Gew.-% Perfluoralkancarbonsäure (Derivat) bzw.
   0,05–0,5 Gew.-% Perfluoralkansulfonsäure (Derivat) in Kombination mit
   0,25–2,0 Gew.-% Pentaarythrittetrastearat
2. 0,05–1,0 Gew.-% Perfluoralkancarbonsäure (Derivat) bzw.
   0,05–0,5 Gew.-% Perfluoralkansulfonsäure (Derivat) in Kombination mit
   0,25–2,0 Gew.-% Pentaerythrittetrastearat und
   0,5 –1,5 Gew.-% Bis-stearylamid des Ethylendiamins.
3. 0,05–1,0 Gew.-% Perfluoralkancarbonsäure (Derivat) bzw.
   0,05–0,5 Gew.-% Perfluoralakansulfonsäure (Derivat) in Kombination mit
   0,25–3,0 Gew.-% Bis-stearylamid des Ethylendiamins.

Besonders bevorzugt sind ABS-Formmassen aus

5–50 Gew.-Tln eines Pfropfproduktes aus
40–80 Gew.-Tln Polybutadien und
60–20 Gew.-Tln in dessen Gegenwart erzeugtem Styrol-Acrylnitril-Copolymerisat mit einem Teilchendurchmesser $d_{50}$ von 0,1–0,6 μ bevorzugt 0,25 bis 0,5 μ,
95–50 Gew.-Tln eines Copolymerisates aus
75–70 Gew.-% Styrol und 25–30 Gew.-% Acrylnitril oder aus
70 Gew.-% α-Methylstyrol und 30 Gew.-% Acrylnitril, wobei die Formmasse nicht mehr als 20 Gew.-% Polybutadien enthält.

Ebenfalls bevorzugt sind ABS-Formmassen aus

6–30 Gew.-Tln eines Pfropfproduktes von
20–60 Gew.-Tln einer Mischung aus Styrol und Acrylnitril im Gewichtsverhältnis 88:12 bis 60:40 auf 80–40 Gew.-Tle eines Butadien-Homo- oder Copolymerisats mit einem Butadiengehalt ≧ 70 Gew.-% und einem mittleren Teilchendurchmesser $d_{50}$ von 0,26–0,65 μ;
14–45 Gew.-Tln eines Pfropfproduktes von
60–40 Gew.-Tln einer Mischung aus Styrol und Acrylnitril im Gewichtsverhältnis 80:20–60:40 auf 40–60 Gew.-Tle eines Butadien-Homo- oder Copolymerisats mit einem Butadiengehalt ≧ 70 Gew.-% und einem mittleren Teilchendurchmesser $d_{50}$ von 0,08–0,25 μ;
25–80 Gew.-Tln eines Copolymerisats von Styrol und/oder α-Methylstyrol einerseits und

Acrylnitril andererseits im Gewichtsverhältnis von 80:20 bis 60:40 und einem mittleren Molekulargewicht von 50 000–200 000, wobei die Mindestmenge des Copolymerisats in der Gesamtmischung 30 Gew.-% sein muss.

Beispiele

A. Herstellung und Charakteristik der ABS-Formmassen

Für die Herstellung der ABS-Formmassen wurden zwei Verfahren benutzt:

1. Der durch Emulsionspolymerisation hergestellte Pfropfkautschuklatex wird mit einem oder mehreren durch Emulsionspolymerisation hergestellten SAN-Copolymerisaten-Latices in bestimmtem Mengenverhältnis gemischt. Nach Zugabe einer wässrigen Stabilisatordispersion – die pro 100 Gew.-Tle Polymer 0,25–1,5 Gew.-Tle eines phenolischen Antioxydants enthält – wird die Latex-Mischung durch Elektrolyt- bzw. Säurezusatz koaguliert. Das resultierende Pulver wird bei 70–80 °C im Vakuumtrockenschrank getrocknet.

2. Der durch Emulsionspolymerisation hergestellte Pfropfkautschuklatex – oder auch eine Mischung mehrerer Pfropfkautschuklatices – wird nach Stabilisatorzusatz koaguliert und zum Pulver aufgearbeitet. SAN-Copolymerisat kann – falls erforderlich – wie unter B beschrieben eingearbeitet werden.

Die benutzten ABS-Pfropfkautschuke bzw. SAN-Copolymerisate sind in Tabelle 1 und 2 charakterisiert.

Tabelle 1: Pfropfkautschuke

| Pfropf-polymer Bezeichnung | Gew.-Verhältnis Pfropfgrundlage :Pfropfauflage | Gew.-Verhältnis Styrol: Acrylnitril i.d. Monomermischg. | mittl.[1] Teilchen-durchmesser $d_{50}$ (nm) | G-Wert[2] | Zusammensetzg.[3] d. Pfropfgrundlage B Gew.-% | S Gew.-% |
|---|---|---|---|---|---|---|
| P1 | 50:50 | 70:30 | 400 | 0,55 | 100 | — |
| P2 | 60:40 | 88:12 | 400 | 0,45 | 100 | — |
| P3 | 50:50 | 70:30 | 400 | 0,72 | 100 | — |

[1] Ultrazentrifugen-Messungen, vergl. W. Scholtan, H. Lange, Kolloidz. und Z. Polymere 250 (1972) 783–796 bzw. G. Kämpf, H. Schuster, Angew. Makromol. Chemie 14 (1970) 111–129.
Mit Teilchendurchmesser ist immer der $d_{50}$-Wert gemeint.

[2] Pfropfgrad G (G-Wert) bezeichnet das Verhältnis $\frac{\text{Styrol/Acrylnitril gepfropft}}{\text{Pfropfgrundlage}}$ als dimensionslose Zahl.

[3] B = Butadien, S = Styrol

Tabelle 2
Styrol-Acrylnitril- und α-Methylstyrol-Acrylnitril-Copolymere

| Copolymerisat Bezeichnung | Copolymerisat-Zusammensetzung (Gew.-%) Styrol Acrylnitril α-Methylstyrol | Viskosität[1] $\eta\frac{\text{spez.}}{C}$ $\left(\frac{cm^3}{g}\right)$ | Molekulare Uneinheitlichkeit[2] $U_n$ |
|---|---|---|---|
| S1 | 74 : 26 | 95 | 3,0 |
| S2 | 70 : 30 | 110 | 2,5 |

[1] Viskosität = $\eta\frac{\text{spez.}}{C}$ bei C = 5 g/l in Methyläthylketon bei 25 °C = «Viscosity-Number»
Siehe dazu auch M. Hoffmann u.a. «Polymeranalytik I», Georg-Thieme-Verlag, Stuttgart (1977), S. 325.

[2] $U_n\frac{M_w}{M_n} - I$   $M_w$ = Gewichtsmittel der Molmasse
$M_n$ = Zahlenmittel der Molmasse

B. Compoundierung

Für das Mischen von Pfropfprodukt und thermoplastischem Harz sowie für das Einarbeiten der Perfluoralkansäure können alle bekannten Compoundierungsaggregate verwendet werden, wenn sie bei 140–260 °C eine homogene Durchmischung bewirken. In Frage kommen u.a. beheizbare Mischwalzwerke mit nachgeschaltetem Granulator, zweiwellige bzw. vierwellige Schneckenkneter mit nachgeschalteter Granuliereinrichtung, sowie Innenmischer und Banbury-Mixer mit nachgeschaltetem Zweiwalzenstuhl und Granulator.

Hier wurde ein Banbury-Mixer BR (Pomini-Farrel) bei den folgenden Mischbedingungen benutzt:

| | | |
|---|---|---|
| Massetemperatur | : | 190–225 °C |
| Mischzeit | : | 1,5–2 Min. |
| Cycluszeit | : | 2,0–4 Min. |

Nach dem Mischen fällt das Material als plastische Masse auf einen Zweiwellenstuhl (Walze 1 T= 160 °C, Walze 2 T = 150 °C) und wird in Form eines Bandes abgenommen, das nach Abkühlung granuliert wird.

C. Prüfmethodik

Aus dem Granulat werden durch Spritzguss bei 220 °C Normkleinstäbe hergestellt. Diese werden nach DIN-Methoden zur Ermittlung der Kerbschlagzähigkeit, Schlagzähigkeit und Härte und der Wärmestandfestigkeit nach Vicat B geprüft. Die Verarbeitbarkeit wird mit dem Flachspiraltest nach H. Ebneth, K. Böhm: Fliessfähigkeit von ABS-Polymerisaten; Plastverarbeiter 19 (1968) 4, S. 261–269, bei 220 °C geprüft.

Beispiele 1 bis 5, Vergleichsbeispiel a

Durch Latexmischung und Koagulation wird eine Formmasse folgender Zusammensetzung hergestellt:

| | |
|---|---|
| Pfropfpolymerisat P2 | 155 Gew.-Teile |
| Pfropfpolymerisat P3 | 245 Gew.-Teile |
| Harzpolymerisat S1 | 600 Gew.-Teile |

Das Pulver wird im Banbury-Mixer BK gemäss B. compoundiert und dabei auf 100 Gew.-Teile Pulver zugefügt:

| Beispiel | Fluorverbindung der Tabelle 3, Gew.-Tle |
|---|---|
| a | -,- |
| 1 | 0,5 |
| 2 | 0,5 |
| 3 | 0,5 |
| 4 | 0,5 |
| 5 | 0,5 |

Tabelle 3

Eingesetzte Fluorverbindungen: $CF_3-(CF_2)_n-x$

| Typ | n | x |
|---|---|---|
| A | 7 | $SO_3K$ |
| B | 6 | $COONH_4$ |
| C | 7 | $COO\frac{Ca}{2}$ |
| D | 6 | $SO_2N(CH_3)(CH_2-CH_2-CH_3)$ |
| E | 7 | $SO_2N(CH_2-CH_2-CH(CH_3)_2)_2$ |

Die Ausprüfung gemäss C. führt zu den in Tabelle 4 aufgeführten Daten:

Tabelle 4

| Beispiel | a | 1 | 2 | 3 | 4 | 5 |
|---|---|---|---|---|---|---|
| Kerbschlagzähigkeit 23 °C kJ/m² | 5,3 | 15,9 | 16,0 | 15,8 | 16,1 | 15,7 |
| Kugeleindruckhärte 30 s | 88,1 | 87,2 | 88,0 | 87,9 | 87,5 | 88,0 |
| Fliesslänge an Flachspirale 220 C | 37 | 37,5 | 37,5 | 37,0 | 37,5 | 37,0 |
| Fluorverbindung Typ der Tabelle 3 | – | A | B | C | D | E |

Wie aus der Tabelle 4 hervorgeht, führt der Zusatz von 0,5 Gew.-Teilen Fluorverbindung zu erheblicher Kerbschlagverbesserung.

Beispiele 6 bis 10, Vergleichsbeispiele b

Gemäss B. werden der in Beispiel 1 bis 5 benutzten Formmasse zugesetzt (Gew.-Tle auf 100 Gew.-Tle ABS-Pulver):

| Beispiel | Fluorverbindung gem. Tabelle 4 | | Ca-Stearat Gew.-Tle |
|---|---|---|---|
| | Typ | Gew.-Tle | |
| b | | -,- | 0,5 |
| 6 | A | 0,5 | 0,5 |
| 7 | B | 0,5 | 0,5 |
| 8 | C | 0,5 | 0,5 |
| 9 | D | 0,5 | 0,5 |
| 10 | E | 0,5 | 0,5 |

Nach Weiterverarbeitung des Granulates zu Normkleinstäben und Ausprüfung gemäss C. ergeben sich die in Tabelle 5 aufgelisteten Daten:

Tabelle 5

| Beispiel | | | | | | |
|---|---|---|---|---|---|---|
| Fluorverbindung (Typ nach Tabelle 3) | -,- | A | B | C | D | E |
| Kerbschlagzähigkeit 23 °C $kJ/m^2$ | 7,2 | 19,3 | 19,5 | 18,5 | 20,0 | 19,5 |
| Kugeleindruckhärte 30 s | 93 | 99 | 101 | 100 | 104 | 101 |

Beispiele 11 bis 13, Vergleichsbeispiele c, d, e, f

Durch Latexmischung und Koagulation wird eine Formmasse folgender Zusammensetzung hergestellt:

| | |
|---|---|
| Pfropfpolymerisat P2 | 12,6 Gew.-Teile |
| Pfropfpolymerisat P3 | 20,0 Gew.-Teile |
| Harzpolymerisat S1 | 67,4 Gew.-Teile |

Gemäss B. werden, bezogen auf 100 Gew.-Teile Formmasse, zugesetzt:

| Beispiel | Fluorverbindung Typ A, Gew.-Tle | Bisstearylamid des Äthylendiamins (Gew.-Tle) | Pentaerythrit-tetrastearat (Gew.-Tle) |
|---|---|---|---|
| 11 | 0,5 | 3,0 | -,- |
| 12 | 0,5 | 2,0 | 1,0 |
| 13 | 0,5 | 1,0 | 2,0 |
| c | -,- | 3,0 | -,- |
| d | -,- | 2,0 | 1,0 |
| e | -,- | 1,0 | 2,0 |
| f | -,- | -,- | 3,0 |

Die nach Weiterverarbeitung gemäss C. ermittelten Daten sind in Tabelle 6 zusammengefasst:

Tabelle 6

| Beispiel | 11 | 12 | 13 | c | d | e | f |
|---|---|---|---|---|---|---|---|
| Kerbschlagzähigkeit 23 °C $kJ/m^2$ | 11,5 | 13,5 | 14 | 9 | 10 | 12 | 7,5 |
| Kugeleindruckhärte 30s | 93 | 91 | 90 | 94 | 93 | 93 | 94 |
| Fliesslänge an Flachspirale 220 °C | 45 | 45 | 44 | 45 | 45 | 42 | 41 |

Wie aus Tabelle 6 hervorgeht, werden optimale Daten dann erhalten, wenn ein Gleitmittelsystem, bestehend aus Fluor-Verbindung, Pentaerythrittetrastearat und dem Bisstearylamid des Äthylendiamins angewendet wird.

Beispiel 14 bis 16, Vergleichsbeispiel b

Durch Latexmischung und Koagulation wird eine ABS-Formmasse folgender Zusammensetzung hergestellt:

| | |
|---|---|
| Pfropfpolymerisat P1 | 25 Gew.-Teile |
| Harzpolymerisat S2 | 75 Gew.-Teile |

Gemäss B. werden im Innenkneter zugesetzt (Gew.-Teile auf 100 Teile ABS-Pulver):

| Bei-spiel | Fluorverbindung A (Gew.-Teile) | Ca-Stearat (Gew.-Tle) |
|---|---|---|
| b | -,- | 0,5 |
| 14 | 0,1 | 0,5 |
| 15 | 0,25 | 0,5 |
| 16 | 0,5 | 0,5 |

Nach Weiterverarbeitung des Granulates zu Normkleinstäben und Ausprüfung gemäss C. ergeben sich die Daten der Tabelle 7:

Tabelle 7

| Beispiel | b | 14 | 15 | 16 |
|---|---|---|---|---|
| Kerbschlagzähigkeit 23 °C kJ/$m^2$ | 7,2 | 12,8 | 15,5 | 19,3 |
| Kugeleindruckhärte 30 s | 93 | 93 | 97 | 99 |

**Patentansprüche**

1. ABS-Formmassen aus

a) 5–70 Gew.-% eines oder mehrerer Pfropfprodukte

b) 95–30 Gew.-% eines thermoplastischen Harzes, welches ein Polymerisat oder Copolymerisat von Styrol, α-Methylstyrol, Acrylnitril, Methylmethacrylat oder Maleinsäureanhydrid darstellt, gekennzeichnet durch einen Gehalt von 0,05–1,0 Gew.-% einer Perfluoralkansäure oder eines Derivats davon.

2. ABS-Formmasse nach Anspruch 1, gekennzeichnet durch einen zusätzlichen Gehalt von 0,25–5,0 Gew.-% Pentaerythrittetrastearat, Bisstearylamid des Ethylendiamins oder Mischungen davon.

3. ABS-Formmasse nach Anspruch 1, dadurch gekennzeichnet, dass das Pfropfprodukt a) durch Polymerisation der Pfropfmonomeren Styrol, Styrol und Acrylnitril, Styrol und Methylmethacrylat, oder Styrol und Acrylnitril und Methylmethacrylat auf einen Polybutadien-, Butadien/Acrylnitril- oder Butadien/Styrol-Kautschuk erhalten worden sind, und dass das thermoplastische Harz ein Styrol/Acrylnitril-Copolymerisat ist.

4. ABS-Formmasse nach Anspruch 1, dadurch gekennzeichnet, dass die Perfluoralkansäure der Formel $CF_3-(CF_2)_n-COOH$ oder $CF_3-(CF_2)_n-SO_3H$ ($n = 1–20$) entspricht bzw. das Derivat ein Salz, ein Ester oder ein Amid ist.

5. Verwendung von 0,05–1,0 Gew.-% einer Perfluoralkansäure und/oder eines -Derivats als Zusatz zu ABS-Formmassen zur Verbesserung der Kerbschlagzähigkeit.

6. Verwendung von 0,05–1,0 Gew.-% einer Perfluoralkancarbonsäure oder -sulfonsäure oder eines Alkali-, Erdalkali- oder Ammoniumsalzes, eines Esters oder Amids davon, zur Verbesserung der Kerbschlagzähigkeit von ABS-Formmassen.

7. Verwendung von
0,05–1,0 Gew.-% Perfluoralkancarbonsäurederivat bzw.
0,05–0,5 Gew.-% Perfluoralkansulfonsäurederivat in Kombination mit
0,25–3,0 Gew.-% Pentaerythrittetrastearat gemäss Anspruch 5.

8. Verwendung von
0,05–1,0 Gew.-% Perfluoralkancarbonsäurederivat bzw.
0,05–0,5 Gew.-% Perfluoralkansulfonsäurederivat in Kombination mit
0,25–2,0 Gew.-% GPentaerythrittetrastearat und
0,5 –1,5 Gew.-% Bis-stearylamid des Ethylendiamins gemäss Anspruch 5.

9. Verwendung von
0,05–1,0 Gew.-% Perfluoralkancarbonsäurederivat bzw.
0,05–0,5 Gew.-% Perfluoralkansulfonsäurederivat in Kombination mit
0,25–3,0 Gew.-% Bis-stearylamid des Ethylendiamins gemäss Anspruch 5.

**Revendications**

1. Matières à mouler du type ABS consistant en:

a) 5 à 70% en poids d'un ou plusieurs produits de greffage,

b) 95 à 30% en poids d'une résine thermoplastique consistant en un polymère ou copolymère du styrène, de l'α-méthylstyrène, de l'acrylonitrile, du méthacrylate de méthyle ou de l'anhydride maléique, caractérisées en ce qu'elles contiennent de 0,05 à 1,0% en poids d'un acide perfluoroalcanoïque ou d'un dérivé d'un tel acide.

2. Matière à mouler du type ABS selon la revendication 1, caractérisée en ce qu'elle contient en outre de 0,25 à 5,0% en poids de tétrastéarate de pentaérythritol, de bis-stéarylamide de l'éthylènediamine ou de mélanges de ces composés.

3. Matière à mouler du type ABS selon la revendication 1, caractérisée en ce que le produit de greffage a) a été obtenu par polymérisation des monomères de greffage styrène, styrène et acrylonitrile, styrène et méthacrylate de méthyle ou styrène et acrylonitrile et méthacrylate de méthyle sur un caoutchouc de polybutadiène, de butadièneacrylonitrile ou de butadiène/styrène, et la résine thermoplastique est un copolymère styrène/acrylonitrile.

4. Matière à mouler du type ABS selon la revendication 1, caractérisée en ce que l'acide perfluoralcanoïque répond à la formule $CF_3-(CF_2)_n-COOH$ ou $CF_3-(CF_2)_n-SO_3H$ ($n = 1$ à 20) et le dérivé est un sel, un ester ou un amide.

5. Utilisation de 0,05 à 1,0% en poids d'un acide perfluoralcanoïque et/ou d'un dérivé d'un tel acide en tant qu'additif à des matières à mouler du type ABS dont on veut améliorer la résistance au choc sur barreau entaillé.

6. Utilisation de 0,05 à 1,0% en poids d'un acide perfluoralcane-carboxylique ou -sulfonique ou d'un sel de métal alcalin, de métal alcalino-terreux ou d'ammonium, d'un ester ou d'un amide d'un tel acide, pour améliorer la résistance au choc sur

barreau entaillé de matières à mouler du type ABS.

7. Utilisation de:

0,05 á 1,0% en poids d'un dérivé d'acide perfluoralcane-carboxylique ou

0,05 à 0,5 en poids d'un dérivé d'acide perfluoralcane-sulfonique en combination avec

0,25 à 3,0% en poids de tétrastéarate de pentaérythritol selon la revendication 5.

8. Utilisation de:

0,05 à 1,0% en poids d'un dérivé d'acide perfluoralcane-carboxylique ou

0,05 à 0,5% en poids d'un dérivé d'acide perfluoralcane-sulfonique en combination avec

0,25 à 2,0% en poids de tétrastéarate de pentaérythritol et

0,5 à 1,5% en poids de bis-stéarylamide de l'éthylène-diamine selon la revendication 5.

9. Utilisation de:

0,05 à 1,0% en poids d'un dérivé d'acide perfluoralcane-carboxylique ou

0,05 à 0,5% en poids d'un dérivé d'acide perfluoralcane-sulfonique en combination avec

0,25 à 3,o% en poids de bis-stéarylamide de l'éthylène-diamine selon la revendication 5.

**Claims**

1. ABS moulding compositions comprising

a) 5–70% by weight of one or more graft products,

b) 95–30% by weight of a thermoplastic resin, which is a polymer or copolymer of styrene, α-methyl styrene, acrylonitrile, methyl methacrylate or maleic acid anhydride, characterised in that they contain 0.05–1.0% by weight of a perfluoroalkane acid or a derivative thereof.

2. ABS moulding composition according to Claim 1, characterised in that it additonally contains 0.25–5.0% by weight of pentaerythritol tetrastearate, bis-stearyl amide of ethylene diamine or mixtures thereof.

3. ABS moulding composition according to Claim 1, characterised in that the graft product a) has been obtained by polymerisation of the graft monomers styrene, styrene and acrylonitrile, styrene and methyl methacrylate, or styrene and acrylonitrile and methyl methacrylate on a polybutadiene, butadiene/acrylonitrile or butadiene/styrene rubber, and in that the thermoplastic resin is a styrene/acrylonitrile copolymer.

4. ABS moulding composition according to Claim 1, characterised in that the perfluoroalkane acid corresponds to the formula $CF_3-(CF_2)_n-COOH$ or $CF_3-(CF_2)_n-SO_3H$ ($n = 1-20$) and the derivative is a salt, an ester or an amide.

5. Use of 0.05–1,0% by weight of a perfluoroalkane acid and/or a perfluoroalkane acid derivative as an additive in ABS compositions for improving the notched impact strength.

6. Use of 0.05–1,0% by weight of a perfluoroalkane carboxylic acid or sulphonic acid or of an alkali, alkaline earth or ammonium salt, ester or amide thereof, for improving the notched impact strength of ABS moulding compositions.

7. Use according to Claim 5 of

0.05 to 1.0% by weight of a perfluoroalkane carboxylic acid derivative or

0.05 to 0.5% by weight of a perfluoroalkane sulphonic acid derivative in combination with

0.25 to 3.0 by weight of pentaerythritol tetrastearate.

8. Use according to Claim 5 of

0.05 to 1.0% by weight of a perfluoroalkane carboxylic acid derivative or

0.05 to 0.5% by weight of a perfluoroalkane sulphonic acid derivative in combination with

0.25 to 2.0% by weight of pentaerythritol tetrastearate and

0.5 to 1.5% by weight of the bis-stearylamide of ethylene diamine.

9. Use according to Claim 5 of

0.05 to 1.0% by weight of a perfluoroalkane carboxylic acid derivative or

0.05 to 0.5% by weight of a perfluoroalkane sulphonic acid derivative in combination with

0.25 to 3.0% by weight of the bis-stearylamide of ethylene diamine.